(19)

Europäisches Patentamt
European Patent Office
Office européen des brevets

(11) **EP 3 287 422 A1**

(12) **EUROPEAN PATENT APPLICATION**

(43) Date of publication:
**28.02.2018 Bulletin 2018/09**

(51) Int Cl.:
**C03B 37/027** $^{(2006.01)}$

(21) Application number: **17179513.1**

(22) Date of filing: **04.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.07.2016 JP 2016139485**

(71) Applicant: **Sumitomo Electric Industries, Ltd. OSAKA-SHI, OSAKA 541-0041 (JP)**

(72) Inventors:
• **Tamura, Yoshiaki**
  **Kanagawa (JP)**
• **Hasegawa, Takemi**
  **Kanagawa (JP)**

(74) Representative: **Hoffmann Eitle**
**Patent- und Rechtsanwälte PartmbB**
**Arabellastraße 30**
**81925 München (DE)**

(54) **METHOD FOR PRODUCING MULTI-CORE OPTICAL FIBER**

(57)     Provided is a method for producing a multi-core optical fiber that includes a plurality of cores made of pure silica glass and exhibits a minor transmission loss. The method for producing a multi-core optical fiber according to the present invention is a method for producing a multi-core optical fiber including a plurality of cores made of pure silica glass substantially free of Ge and a cladding surrounding the plurality of cores and made of a fluorine-containing silica glass. The multi-core optical fiber is produced by drawing an optical fiber preform at a drawing tension T satisfying the relationship 0.06 g/$\mu$m$^2$ < T/S < 0.4 g/$\mu$m$^2$, wherein S is a total cross-sectional area of the plurality of cores.

**FIG. 2**

**Description**

BACKGROUND OF THE INVENTION

Field of the Invention

The present invention relates to a method for producing a multi-core optical fiber.

Description of the Related Art

A pure silica core optical fiber includes a core made of pure silica glass substantially free of Ge and a cladding surrounding the core and made of a fluorine-containing silica glass. In general, pure silica core optical fibers experience low Rayleigh scattering in the core and thus exhibit a transmission loss smaller than those of optical fibers including a core made of a Ge-containing silica glass.

When a pure silica core optical fiber is produced by drawing an optical fiber preform, a drawing tension is concentrated in the core because the viscosity of the core is higher than the viscosity of the cladding, and as a result, a residual stress occurs in the core. It is known that the residual stress in the core may cause the pure silica core optical fiber to undergo a change in refractive index profile or to exhibit glass defects that cause an increase in transmission loss (see Y. Hibino et al. J. Appl. Phys., Vol. 65, pp. 30-34). Hence, the drawing tension in producing a pure silica core optical fiber is preferably low.

However, an excessively low drawing tension increases the likelihood that the optical fiber vibrates between the neck down portion and a take-up roller and shows a variation in fiber diameter and core diameter in the longitudinal direction. A slight variation in core diameter may result in an increase in transmission loss. Thus, the drawing tension has a preferred range.

In the case of a multi-core optical fiber including a plurality of cores made of pure silica glass substantially free of Ge and a cladding surrounding the plurality of cores and made of a fluorine-containing silica glass, a change in refractive index profile due to a residual stress in the cores may influence the crosstalk between two adjacent cores among the plurality of cores. It has been thought that such a problem is effectively avoided by using a low drawing tension or disposing some other high-viscosity regions for reducing the tension in the cores (see JP 2011-215556A).

SUMMARY OF THE INVENTION

Accordingly, it is an object of the present invention to provide a method for producing a multi-core optical fiber that includes a plurality of cores made of pure silica glass and exhibits a minor transmission loss.

A method for producing a multi-core optical fiber according to the present invention produces a multi-core optical fiber including a plurality of cores made of pure silica glass substantially free of Ge and a cladding surrounding the plurality of cores and made of a fluorine-containing silica glass. The method includes drawing an optical fiber preform at a drawing tension T satisfying a relationship $0.06 \text{ g/}\mu\text{m}^2 < T/S < 0.4 \text{ g/}\mu\text{m}^2$, wherein S is a total cross-sectional area of the plurality of cores. In the present description, "pure silica glass substantially free of Ge" means a silica glass containing $GeO_2$ at a concentration of 0.01% by weight or less, which can cause only a negligible increase in refractive index.

According to another aspect of the present invention, the method includes drawing an optical fiber preform at a drawing tension T satisfying a relationship $1{,}200 \text{ g} \le T/(S/Sf) \le 11{,}000 \text{ g}$, wherein Sf is a cross-sectional area of the fiber, and S is a total cross-sectional area of the plurality of cores.

In the methods for producing a multi-core optical fiber according to these aspects, the optical fiber preform is preferably drawn at a drawing tension that causes each of the plurality of cores to have a residual stress of 100 MPa or less.

A method for producing a multi-core optical fiber according to still another aspect of the present invention produces a multi-core optical fiber including N cores made of pure silica glass substantially free of Ge and a cladding surrounding the N cores and made of a fluorine-containing silica glass. The method includes drawing an optical fiber preform at a drawing tension T satisfying a relationship $3 \text{ g} \times N \le T \le 20\text{g} \times N$. The drawing tension T more preferably satisfies a relationship $3 \text{ g} \times N \le T \le 10 \text{ g} \times N$. In the method for producing a multi-core optical fiber according to this aspect, the optical fiber preform is preferably drawn at a drawing tension that causes each of the N cores to have a residual stress of 100 MPa or less.

According to the present invention, a multi-core optical fiber can be produced that includes a plurality of cores made of pure silica glass and exhibits a minor transmission loss.

BRIEF DESCRIPTION OF THE DRAWINGS

Figure 1 is a flowchart illustrating a method for producing a multi-core optical fiber according to one embodiment.

Figure 2 is a graph showing the relationship between drawing tension T and transmission loss

Figure 3 is a graph showing the relationship between tension per core cross-sectional area T/S and transmission loss.

Figure 4 is a graph showing the relationship between T/(S/Sf) and transmission loss.

Figure 5 is a graph showing the relationship between drawing tension T and transmission loss.

Figure 6 is a graph showing the relationship between drawing tension T and transmission loss.

Figure 7 is a graph showing the relationship between drawing tension per core T/N and transmission loss.

DESCRIPTION OF THE PREFERRED EMBODIMENTS

Preferred embodiments of the present invention will now be described in detail with reference to the accompanying drawings. The invention is not limited to these embodiments and is indicated by the appended claims. All changes which come within the meaning and range of equivalency of the claims are to be embraced within their scope.
The inventors have made the following finding through the process of research and development of drawing of optical fiber preforms. When a multi-core optical fiber including a plurality of cores made of pure silica glass is produced at a drawing tension equal to or lower than a drawing tension in producing a single-core optical fiber including a single core made of pure silica glass, the multi-core optical fiber may exhibit a major transmission loss. This is presumably because, in the multi-core optical fiber, the tension is distributed across the cores, and the tension exerted on each core is excessively low. Therefore, preferably, the drawing tension in producing a multi-core optical fiber including a plurality of cores made of pure silica glass is higher than the drawing tension in producing a single-core optical fiber including a single core made of pure silica glass and is appropriately set according to the number of cores and the total core cross-sectional area.

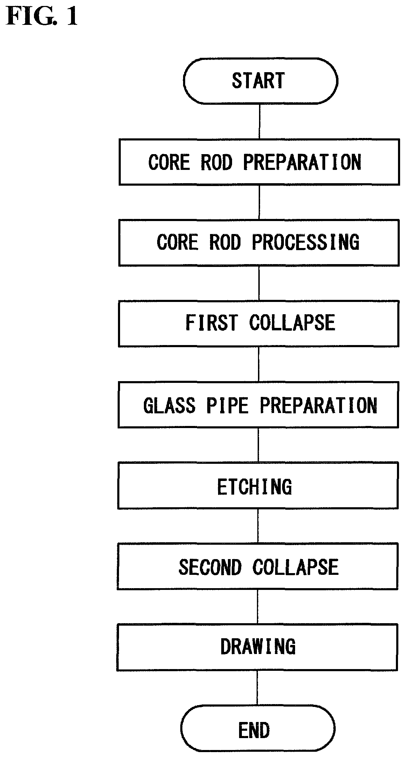

Figure 1 is a flowchart illustrating a method for producing a multi-core optical fiber according to one embodiment. An optical fiber preform for producing the multi-core optical fiber is prepared through a core rod preparation step, a core rod processing step, a first collapse step, a glass pipe preparation step, an etching step, and a second collapse step. The multi-core optical fiber is produced by drawing the optical fiber preform in a drawing step.
In the core rod preparation step, a core rod that is to be a core of a multi-core optical fiber is prepared. The core rod is made of pure silica glass substantially free of Ge. The core rod can be prepared by a commonly used method for preparing a glass rod for optical fibers, such as vapor phase axial deposition (VAD), outside vapor phase deposition (OVD), or modified chemical vapor deposition (MCVD). OH is preferably contained in the core rod at a concentration of 0.1 ppm or less. Ge and other metals are preferably contained in the core rod at or lower than a concentration that causes a transmission loss of 0.1 dB/km or less. VAD is suitable for preparing a core rod made of such a high-purity silica glass.
In the core rod processing step, the above core rod is processed into a core rod of desired size by performing heat stretching and peripheral grinding. In the heat stretching, an oxyhydrogen burner is used as a heat source. As a result, the periphery of the core rod becomes contaminated with OH impurities caused by oxyhydrogen flames, and the OH impurities are then removed by the peripheral grinding. In Example 1 described below, the core rod was processed by the heat stretching to have a diameter of 13 mm and then by the peripheral grinding to have a diameter of 7 mm.
In the first collapse step, the above core rod is inserted into a glass pipe, and the core rod and the glass pipe are integrated by a rod-in-collapse method. The glass pipe used here is a pipe made of a fluorine-containing silica glass having a refractive index difference relative to pure silica glass ( $\left| \dfrac{n_{glass\ pipe} - n_{pure\ silica}}{n_{pure\ silica}} \right|$ ) of, for example, 0.4% to 0.7%. A problem that may arise in multi-core optical fibers is crosstalk between two adjacent cores among a plurality of cores. To reduce such crosstalk, it is preferable to dispose around the periphery of the cores a cladding having a refractive index sufficiently smaller than the refractive index of the cores. For this reason, the relative refractive index difference of the glass pipe is preferably 0.4% or more. An excessively high fluorine concentration causes an increase in fluorine-induced scattering loss. For this reason, the fluorine concentration in the glass pipe is preferably such that the relative refractive index difference is 0.7% or less.

In the glass pipe preparation step, a glass pipe having a plurality of holes that is to be a common cladding of a multi-core optical fiber is prepared. A cylinder that is made of a fluorine-containing silica glass having a relative refractive index difference of, for example, 0.1% to 0.4%, is prepared, and a plurality of holes are formed in the cylinder so as to extend through the cylinder in the axial direction, thereby preparing a glass pipe. The number and positions of the holes in the glass pipe correspond to the number and positions of cores in a multi-core optical fiber to be produced. The space between the holes is preferably designed such that the crosstalk is 50 dB per 100 km. In Example 1 described below, seven holes were formed in a glass pipe so that a core-to-core pitch in a multi-core optical fiber was 45 $\mu$m.

In the etching step, etching is performed to remove foreign substances attached to the surface of the glass pipe prepared in the above glass pipe preparation step. The foreign substances include trace metals which can cause an increase in loss, organic matter which can cause a bubble, and water which can cause an increase in OH loss. In the etching, halogen gas is fed into the holes of the glass pipe heated to a high temperature (typically 1,500°C or higher) to react a silica glass of the surface of the holes with the halogen gas, thereby gas-phase treating the silica glass to remove foreign substances, while fluorine-containing gas (e.g., HF, $NF_3$, or $SF_6$) is also fed into the holes, thereby gas-phase etching the silica glass of the surface of the holes to clear the inner surface of the glass pipe. The clearing of the surface of the holes of the glass pipe need not be performed by the gas phase method and may be performed by a liquid phase method using an aqueous HF solution or the like.

In the second collapse step, the core rod that has passed through the first collapse step is inserted into each of the plurality of holes in the glass pipe that has passed through the etching step, and the core rod and the glass pipe are integrated by heating the outside of the glass pipe using a heat source such as an oxyhydrogen burner, an induction heating furnace, or a resistance heating furnace, thereby preparing an optical fiber preform.

In the drawing step, the optical fiber preform is drawn by heating and softening an end of the preform to produce a multi-core optical fiber. The drawing tension in this step is appropriately set according to the number of cores and the total core cross-sectional area of a multi-core optical fiber.

Table 1 shows production conditions, etc. of multi-core optical fibers of Example 1.

Table 1

| Drawing tension T(g) | Tension per core T/N(g) | Tension per core cross-sectional area T/S(g/$\mu$m$^2$) | T/(S/Sf) (g) | Transmission loss (dB/km) |
|---|---|---|---|---|
| 14 | 2 | 0.04 | 1013 | 0.17 |
| 21 | 3 | 0.06 | 1519 | 0.162 |
| 42 | 6 | 0.12 | 3038 | 0.158 |
| 63 | 9 | 0.18 | 4556 | 0.16 |
| 84 | 12 | 0.24 | 6075 | 0.163 |
| 119 | 17 | 0.34 | 8606 | 0.165 |
| 154 | 22 | 0.44 | 11138 | 0.168 |
| 182 | 26 | 0.52 | 13163 | 0.19 |
| 210 | 30 | 0.60 | 15188 | 0.25 |
| 231 | 33 | 0.66 | 16706 | 0.33 |
| 266 | 38 | 0.76 | 19238 | 0.44 |
| 315 | 45 | 0.90 | 22781 | 0.55 |

In the table, T denotes a drawing tension, S a total core cross-sectional area, and Sf an optical fiber cross-sectional area. The transmission loss is determined at a wavelength of 1,550 nm. In Example 1, the outer glass diameter of an optical fiber was 180 $\mu$m, the average core diameter was 8 $\mu$m, and the number of cores N was 7.

Table 2 shows production conditions, etc. of multi-core optical fibers of Example 2.

Table 2

| Drawing tension T(g) | Tension per core T/N(g) | Tension per core cross-sectional area T/S(g/$\mu$m$^2$) | T/(S/Sf) (g) | Transmission loss (dB/km) |
|---|---|---|---|---|
| 4 | 1 | 0.02 | 400 | 0.17 |
| 12 | 3 | 0.06 | 1200 | 0.162 |
| 24 | 6 | 0.12 | 2400 | 0.158 |
| 32 | 8 | 0.16 | 3200 | 0.16 |
| 44 | 11 | 0.22 | 4400 | 0.163 |
| 64 | 16 | 0.32 | 6400 | 0.165 |
| 80 | 20 | 0.40 | 8000 | 0.167 |
| 92 | 23 | 0.46 | 9200 | 0.17 |
| 112 | 28 | 0.56 | 11200 | 0.18 |
| 140 | 35 | 0.70 | 14000 | 0.23 |
| 156 | 39 | 0.78 | 15600 | 0.28 |
| 180 | 45 | 0.90 | 18000 | 0.28 |
| 212 | 53 | 1.05 | 21200 | 0.35 |
| 220 | 55 | 1.09 | 22000 | 0.5 |
| 252 | 63 | 1.25 | 25200 | 0.6 |

In Example 2, the outer glass diameter of an optical fiber was 140 $\mu$m, the average core diameter was 8 $\mu$m, and the number of cores N was 4.

Table 3 shows production conditions, etc. of multi-core optical fibers of Example 3.

Table 3

| Drawing tension T(g) | Tension per core T/N (g) | Tension per core cross-sectional area T/S(g/$\mu$m$^2$) | T/(S/Sf) (g) | Transmission loss (dB/km) |
|---|---|---|---|---|
| 7 | 2 | 0.02 | 469 | 0.173 |
| 21 | 5 | 0.06 | 1406 | 0.165 |
| 49 | 12 | 0.13 | 3280 | 0.158 |
| 70 | 18 | 0.18 | 4686 | 0.161 |
| 91 | 23 | 0.24 | 6092 | 0.164 |
| 112 | 28 | 0.29 | 7498 | 0.165 |
| 140 | 35 | 0.37 | 9372 | 0.167 |
| 161 | 40 | 0.42 | 10778 | 0.17 |
| 196 | 49 | 0.52 | 13121 | 0.25 |
| 245 | 61 | 0.64 | 16401 | 0.33 |
| 273 | 68 | 0.72 | 18275 | 0.45 |
| 315 | 79 | 0.83 | 21087 | 0.6 |

In Example 3, the outer glass diameter of an optical fiber was 180 $\mu$m, the average core diameter was 11 $\mu$m, and the number of cores N was 4.

Table 4 shows production conditions, etc. of single-core optical fibers of Comparative Example.

Table 4

| Drawing tension T(g) | Tension per core T/N(g) | Tension per core cross-sectional area T/S(g/$\mu$m$^2$) | T/(S/Sf) (g) | Transmission loss (dB/km) |
|---|---|---|---|---|
| 1 | 1 | 0.02 | 244 | 0.18 |
| 3 | 3 | 0.06 | 732 | 0.175 |
| 6 | 6 | 0.12 | 1465 | 0.158 |
| 8 | 8 | 0.16 | 1953 | 0.16 |
| 11 | 11 | 0.22 | 2686 | 0.162 |
| 16 | 16 | 0.32 | 3906 | 0.163 |
| 20 | 20 | 0.40 | 4883 | 0.158 |
| 25 | 25 | 0.50 | 6104 | 0.154 |
| 31 | 31 | 0.62 | 7568 | 0.15 |
| 35 | 35 | 0.70 | 8545 | 0.15 |
| 39 | 39 | 0.78 | 9521 | 0.154 |
| 45 | 45 | 0.90 | 10986 | 0.158 |
| 53 | 53 | 1.05 | 12939 | 0.16 |
| 55 | 55 | 1.09 | 13428 | 0.17 |
| 63 | 63 | 1.25 | 15381 | 0.18 |
| 66 | 66 | 1.31 | 16113 | 0.191 |
| 74 | 74 | 1.47 | 18066 | 0.25 |
| 83 | 83 | 1.65 | 20264 | 0.4 |

In Comparative Example, the outer glass diameter of an optical fiber was 125 $\mu$m, the average core diameter was 8 $\mu$m, and the number of cores N was 1.

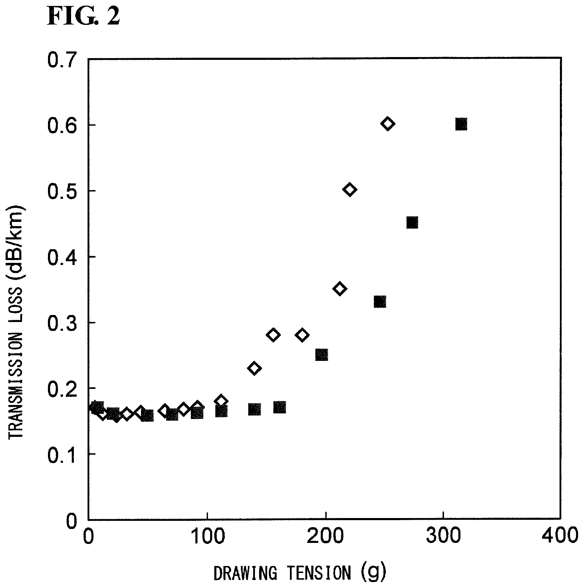

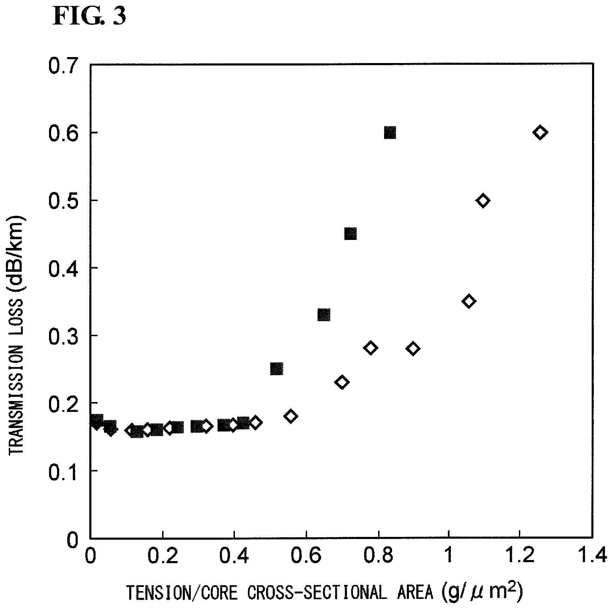

Figure 2 is a graph showing the relationship between drawing tension T and transmission loss. Figure 3 is a graph showing the relationship between tension per core cross-sectional area T/S and transmission loss. Solid squares represent a 4-core optical fiber having an outer glass diameter of 180 $\mu$m and an average core diameter of 11 $\mu$m, and hollow diamonds represent a 4-core optical fiber having an outer glass diameter of 160 $\mu$m and an average core diameter of 8 $\mu$m.

In the drawing step, since a drawing tension is distributed across a plurality of cores, the tension exerted on a glass per core cross-sectional area decreases with increasing total core cross-sectional area S. A reduced tension on the glass may inhibit an increase in transmission loss that might otherwise be caused by glass defects due to glass deformation.

Figure 2 shows that two 4-core optical fibers, when having different average core diameters, exhibit increases in transmission loss at different drawing tensions. Figure 3 shows that regardless of the difference in average core diameter, both the two 4-core optical fibers exhibit increases in transmission loss when the tension per core cross-sectional area T/S is over 0.4 g/$\mu$m$^2$. Thus, when a multi-core optical fiber is produced by drawing an optical fiber preform, a preferred range of the drawing tension T can be determined from the tension per core cross-sectional area T/S. It can be seen from Fig. 3 that the tension per core cross-sectional area T/S is preferably 0.05 to 0.4, and in this range, the transmission loss can be constantly small.

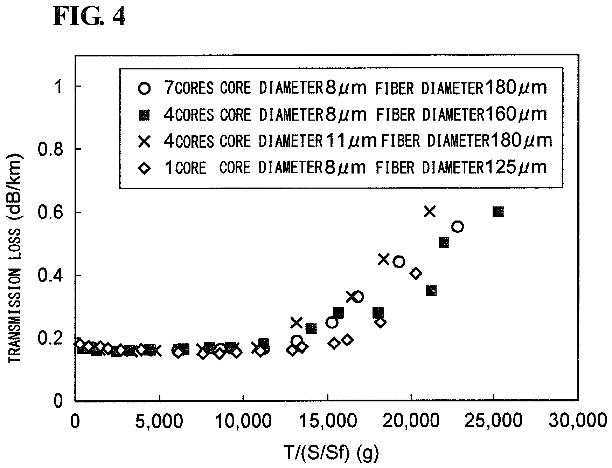

Figure 4 is a graph showing the relationship between T/(S/Sf) and transmission loss. This graph shows that regardless of the number of cores N, total core cross-sectional area S, and optical fiber cross-sectional area Sf, the dependencies of transmission loss on T/(S/Sf) agree well with one another when T/(S/Sf) is in the range of 11,000 or less. It is known that when cores are made of pure silica glass, the tension during the drawing step is concentrated in the core part. However, it is presumed that since a cladding part also has a certain degree of viscosity, the drawing tension is distributed to the cladding part to reduce the actual tension exerted on the core part. Hence, it is presumed that even if optical fibers have the same core cross-sectional area, the tension exerted on the cores increases as the ratio of total core cross-sectional area S to optical fiber cross-sectional area Sf increases. Thus, it can be seen from Fig. 4 that T/(S/Sf) is preferably in the range of 1,200 to 11,000, and in this range, the transmission loss can be constantly small.

In producing a multi-core optical fiber including a plurality of cores made of pure silica glass, a drawing tension is distributed across the plurality of cores in the drawing step. Hence, the transmission loss of the multi-core optical fiber can be reduced by using a drawing tension higher than that for a single-core optical fiber. In this case, when a tension per core T/N is less than 3 g, a wavelength-independent loss increase presumably due to minor variations in core diameter occurs. In contrast, when the tension per core T/N is more than 20 g, the transmission loss increases on the short wavelength side. This is presumably due to an increase in transmission loss caused by glass defects, the increase peaking at a wavelength of 630 nm.

The single-core optical fiber shows no marked loss increase when the tension per core is 50 g or less, while the multi-core optical fibers shows loss increase when the tension per core exceeds 20 g. This is presumably because, in the multi-core optical fibers, multiple cores are disposed to thereby reduce the cross-sectional area of a cladding, and as a result, a drawing tension is more likely to be exerted on the cores.

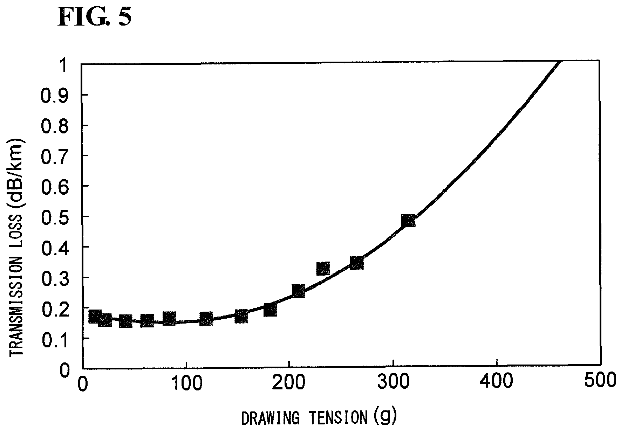

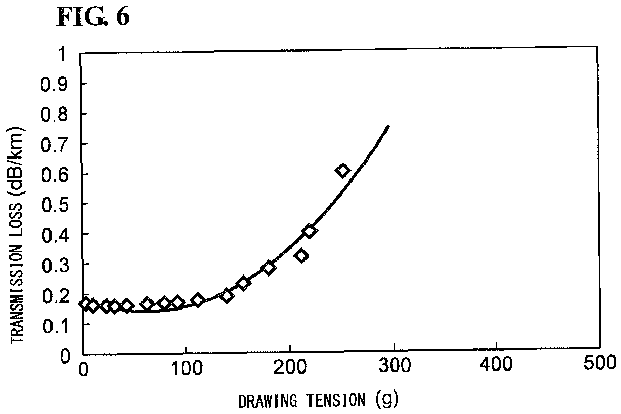

Figure 5 show the relationship between drawing tension T and transmission loss of a 7-core optical fiber having a fiber diameter of 180 $\mu$m and an average core diameter of 8 $\mu$m. Figure 6 shows the relationship between drawing tension T and transmission loss of a 4-core optical fiber having a fiber diameter of 160 $\mu$m and an average core diameter of 8 $\mu$m.

In Fig. 5, in the range of 21 g to zero, the transmission loss increases with decreasing tension. At higher tensions, when the tension is 140 g or less, the tension dependency of loss increase is as low as about 0.001 dB/km for every 10 g of tension, while when the tension is 140 g or more, the tension dependency of loss increase is as high as about 0.02 dB/km for every 10 g of tension. From this result, it can be inferred that the optimal tension for producing a multi-core optical fiber with a minor loss is 21 g to 140 g.

In Fig. 6, in the range of 12 g to zero, the transmission loss increases with decreasing tension. At higher tensions, when the tension is 100 g or less, the tension dependency of loss increase is as low as about 0.002 dB/km for every 10 g of tension, while when the tension is 100 g or more, the tension dependency of loss increase is as high as about 0.01 dB/km for every 10 g of tension. From this result, it can be inferred that the optimal tension for producing a multi-core optical fiber with a minor loss is 12 g to 100 g.

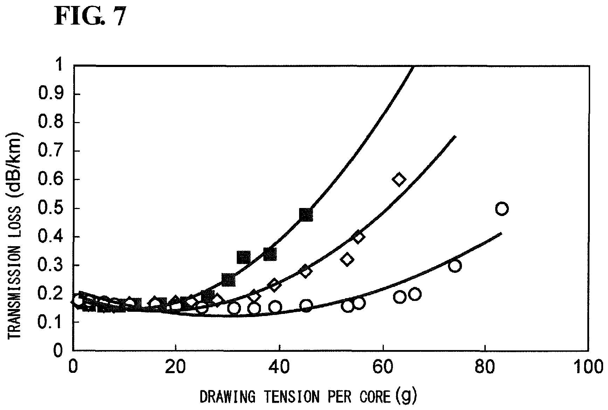

Figure 7 is a graph showing the relationship between tension per core T/N and transmission loss. This graph shows the relationship between T/N and transmission loss of a 7-core optical fiber having an outer glass diameter of 180 $\mu$m and an average core diameter of 8 $\mu$m (denoted by solid squares), a 4-core optical fiber having an outer glass diameter of 160 $\mu$m and an average core diameter of 8 $\mu$m (denoted by hollow diamonds), and a single-core optical fiber having an outer glass diameter of 125 $\mu$m and an average core diameter of 8 $\mu$m (denoted by hollow circles).

Figure 7 shows that when the tension per core T/N is 3 g or less, every optical fiber exhibits an increase in transmission loss. When the tension per core T/N is 20 g or less, every optical fiber exhibits an increase in transmission loss as small as 0.05 dB/km or less for every 10 g of tension, thus achieving a minor transmission loss. This indicates that the multi-core optical fiber is preferably produced by drawing an optical fiber preform at a drawing tension T satisfying the relationship $3 \times N \le T \le 20 \times N$. More preferably, the multi-core optical fiber is produced by drawing an optical fiber preform at a drawing tension T satisfying the relationship $3 \times N \le T \le 10 \times N$.

It is known that when an optical fiber including a core made of pure silica glass is produced, a drawing tension is concentrated in the highly viscous core part in the drawing step, and as a result, glass defects cause an increase in transmission loss. As described above, a drawing tension in a preferred range can achieve a minor transmission loss.

However, when a multi-core optical fiber is actually produced by way of trial, a particular core may exhibit an increase in transmission loss, and the core with an increased loss has a residual stress higher than the residual stresses of other cores. This is presumably because tension is not necessarily evenly distributed across the cores due to the arrangement of the cores or a slight difference in viscosity among the cores caused by variation in the chlorine concentration in the glass cores. In such a case, the residual stress of cores is measured for various samples, such as a fiber sample at an early stage of drawing and a sample of an optical fiber produced by drawing a different optical fiber preform having the same composition, to determine an optimal drawing tension that causes every core to have a residual stress of 100 MPa or less, whereby the transmission loss of every core can be reduced.

**Claims**

1. A method for producing a multi-core optical fiber including a plurality of cores made of pure silica glass substantially free of Ge and a cladding surrounding the plurality of cores and made of a fluorine-containing silica glass, the method comprising drawing an optical fiber preform at a drawing tension T satisfying a relationship 0.06 g/$\mu$m$^2$ < T/S < 0.4 g/$\mu$m$^2$, wherein S is a total cross-sectional area of the plurality of cores.

2. The method for producing a multi-core optical fiber according to Claim 1, wherein the optical fiber preform is drawn at a drawing tension that causes each of the plurality of cores to have a residual stress of 100 MPa or less.

3. A method for producing a multi-core optical fiber including a plurality of cores made of pure silica glass substantially free of Ge and a cladding surrounding the plurality of cores and made of a fluorine-containing silica glass, the method comprising drawing an optical fiber preform at a drawing tension T satisfying a relationship $1{,}200$ g $\leq$ $T/(S/Sf) \leq 11{,}000$ g, wherein Sf is a cross-sectional area of the fiber, and S is a total cross-sectional area of the plurality of cores.

4. The method for producing a multi-core optical fiber according to Claim 3, wherein the optical fiber preform is drawn at a drawing tension that causes each of the plurality of cores to have a residual stress of 100 MPa or less.

5. A method for producing a multi-core optical fiber including N cores made of pure silica glass substantially free of Ge and a cladding surrounding the N cores and made of a fluorine-containing silica glass, the method comprising drawing an optical fiber preform at a drawing tension T satisfying a relationship $3$ g $\times$ N $\leq$ $T \leq 20$ g $\times$ N.

6. The method for producing a multi-core optical fiber according to Claim 5, wherein the drawing tension satisfies a relationship $3$ g $\times$ N $\leq$ T $\leq 10$ g $\times$ N.

7. The method for producing a multi-core optical fiber according to Claim 5 or Claim 6, wherein the optical fiber preform is drawn at a drawing tension that causes each of the N cores to have a residual stress of 100 MPa or less.

## FIG. 1

```
        ┌─────────────┐
        │    START    │
        └──────┬──────┘
               │
   ┌───────────┴───────────┐
   │  CORE ROD PREPARATION │
   └───────────┬───────────┘
               │
   ┌───────────┴───────────┐
   │  CORE ROD PROCESSING  │
   └───────────┬───────────┘
               │
   ┌───────────┴───────────┐
   │    FIRST COLLAPSE     │
   └───────────┬───────────┘
               │
   ┌───────────┴───────────┐
   │ GLASS PIPE PREPARATION│
   └───────────┬───────────┘
               │
   ┌───────────┴───────────┐
   │       ETCHING         │
   └───────────┬───────────┘
               │
   ┌───────────┴───────────┐
   │    SECOND COLLAPSE    │
   └───────────┬───────────┘
               │
   ┌───────────┴───────────┐
   │       DRAWING         │
   └───────────┬───────────┘
               │
        ┌──────┴──────┐
        │     END     │
        └─────────────┘
```

FIG. 2

FIG. 3

# FIG. 4

Legend:
- ○ 7CORES CORE DIAMETER 8 μm FIBER DIAMETER 180 μm
- ■ 4CORES CORE DIAMETER 8 μm FIBER DIAMETER 160 μm
- ✕ 4CORES CORE DIAMETER 11 μm FIBER DIAMETER 180 μm
- ◇ 1CORE CORE DIAMETER 8 μm FIBER DIAMETER 125 μm

Y-axis: TRANSMISSION LOSS (dB/km)

X-axis: T/(S/Sf) (g)

FIG. 5

## FIG. 6

## FIG. 7

Europäisches
Patentamt

European
Patent Office

Office européen
des brevets

**EUROPEAN SEARCH REPORT**

Application Number

EP 17 17 9513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/031320 A1 (NAGAYAMA KATSUYA [JP] ET AL) 14 March 2002 (2002-03-14) * paragraphs [0022], [0041], [0042], [0116] * ----- | 1-7 | INV.<br>C03B37/027 |
| X | US 2016/170137 A1 (BOREL PETER I [DK] ET AL) 16 June 2016 (2016-06-16) * paragraphs [0047] - [0048]; claim 10 * ----- | 1-7 | |

TECHNICAL FIELDS
SEARCHED      (IPC)

C03B
C03C

The present search report has been drawn up for all claims

| Place of search | Date of completion of the search | Examiner |
|---|---|---|
| The Hague | 23 November 2017 | Flügel, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 17 9513

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2017

| Patent document cited in search report | | Publication date | Patent family member(s) | | Publication date |
|---|---|---|---|---|---|
| US 2002031320 | A1 | 14-03-2002 | AU 6550901 | A | 07-03-2002 |
| | | | CA 2355819 | A1 | 28-02-2002 |
| | | | CN 1340470 | A | 20-03-2002 |
| | | | DE 60114342 | D1 | 01-12-2005 |
| | | | DE 60114342 | T2 | 27-07-2006 |
| | | | EP 1191368 | A2 | 27-03-2002 |
| | | | US 2002031320 | A1 | 14-03-2002 |
| | | | US 2004151455 | A1 | 05-08-2004 |
| US 2016170137 | A1 | 16-06-2016 | CN 105527675 | A | 27-04-2016 |
| | | | EP 3012235 | A2 | 27-04-2016 |
| | | | JP 2016081067 | A | 16-05-2016 |
| | | | US 2016109651 | A1 | 21-04-2016 |
| | | | US 2016170137 | A1 | 16-06-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011215556 A

**Non-patent literature cited in the description**

- **Y. HIBINO et al.** *J. Appl. Phys.,* vol. 65, 30-34